(19) Europäisches Patentamt

European Patent Office   (11) Numéro de publication: **0 001 023**

Office européen des brevets   **B1**

(12)   **FASCICULE DE BREVET EUROPEEN**

(45) Date de publication du fascicule de brevet: **14.10.81**

(21) Numéro de dépôt: **78400067.1**

(22) Date de dépôt: **28.07.78**

(51) Int. Cl.³: **B 01 J 2/08,** C 01 F 7/04
//B01J35/08, B01J21/04,
B01J20/08

(54)  **Procédé de fabrication de billes d'alumine.**

(30) Priorité: **03.08.77 FR 7723880**

(43) Date de publication de la demande:
**07.03.79 Bulletin 79/5**

(45) Mention de la délivrance du brevet:
**14.10.81 Bulletin 81/41**

(84) Etats Contractants Désignés:
**BE DE FR GB NL**

(56) Documents cités:
**FR - A - 1 172 385**

(73) Titulaire: **RHONE-POULENC INDUSTRIES
22, avenue Montaigne
F-75008 Paris (FR)**

(72) Inventeur: **Jacques, Roland
579 Montée de Silhol
F-30100 Ales (FR)**
Inventeur: **Poisson, Régis
Résidence des Hauts de Sèvres
F-92310 Sevres (FR)**

(74) Mandataire: **Savina, Jacques et al,
RHONE POULENC Service Brevets Chimie et
Polymères B.P. 753
F-75360 Paris Cedex 08 (FR)**

Courier Press, Leamington Spa, England.

# 0 001 023

### Procédé de fabrication de billes d'alumine

La présente invention concerne un procédé de fabrication de billes d'alumine à partir d'un sol d'alumine par le procédé dit "sol-gel" et leurs applications.

Il est connue de préparer des particules sphéroïdales d'alumine à partir d'un sol d'alumine par le procédé dit "sol-gel" en faisant tomber des gouttelettes de sol d'alumine ou de mélanges contentant de l'alumine dans un liquide non miscible à l'eau et en gélifiant les sphères formées.

Ainsi, le brevet français n° 1 042 771 décrit un procédé consistant essentiellement: à mélanger des solutions de sol d'alumine et d'hexaméthylènetétramine; à disperser ce mélange sous forme de gouttelettes dans un liquide de formage non miscible à l'eau et à procéder dans ce liquide à un vieillissement des sphères formées à une température de 50 à 105°C et sous pression atmosphérique; à soumettre les sphères résultantes à un traitement de vieillissement supplémentaire en milieu ammoniacal et enfin à laver, sécher et calciner les billes ainsi préparées.

Ce procédé présente les inconvénients de nécessiter un temps de vieillissement très long et d'entraîner une importante consommation d'ammoniaque notamment pour la fabrication de sphères de faible densité. Par ailleurs, pour une densité donnée, les performances mécaniques de ces billes sont relativement médiocres.

Il a été décrit dans l'exemple du brevet français n° 1 172 385 un procédé comportant un vieillissement des billes dans le liquide de formage sous pression à une température de 110°C puis un vieillissement en milieu basique. Mais, ainsi qu'il est souligné dans cet exemple ce procédé ne semble pas permettre d'obtenir des billes avec un bon rendement et une bonne résistance mécanique.

La demanderesse a découvert que, contrairement à l'enseignement donné dans cet exemple, il était possible en choisissant des conditions opératoires bien définies d'obtenir de façon bien contrôlée dans une large gamme de densité, des billes présentant d'excellentes propriétés de résistance à l'écrasement.

La présente invention concerne en effet un procédé de fabrication de billes d'alumine à partir d'un sol d'alumine de formule générale $Al_2(OH)_{6-a}X_a$ dans laquelle X est au moins un des anions choisi parmi le groupe constitué par $F^-$, $Cl^-$, $Br^-$, $I^-$, $NO_3^-$, $ClO_4^-$ du type selon lequel on mélange des solutions de sol d'alumine et d'hexaméthylènetétramine à une température inférieure à la température de gélification, on disperse ce mélange sous forme de gouttelettes dans un liquide très peu miscible à l'eau à une température comprise entre 50 et 105°C, on procède dans un liquide peu miscible à l'eau à un vieillissement des billes formées à une température supérieure à 105°C et sous une pression supérieure à la pression atmosphérique, on effectue ensuite un vieillissement des billes en milieu basique à une température comprise entre 50 et 100°C et on lave, sèche et calcine les billes résultantes caractérisé en ce que: le vieillissement des billes dans un liquide très peu miscible à l'eau est effectué à une température comprise entre 120 et 150°C jusqu'à l'obtention d'un taux de neutralisation des anions acides contenus dans le sol de départ d'au moins 68%.

On préférera, aux fins de l'invention, mettre en oeuvre un sol d'hydroxychlorure d'aluminium. Les sols d'alumine peuvent être obtenus, notamment, par digestion d'aluminium métallique dans l'acide HX ou dans une solution de Al $X_3$, par électrolyse d'une solution de sel d'aluminium, par neutralisation d'un sel d'aluminium plus ou moins basique par une base et élimination du sel formé, par réaction d'un sel d'aluminium avec un donneur d'électron comme l'oxyde d'éthylène et élimination du produit de réaction, par mise en contact d'un sel d'aluminium avec un solvant non miscible à l'eau contenant une amine aliphatique à longue chaîne puis récupération de la phase aqueuse contenant le sel basique et concentration, par peptisation d'un gel d'alumine fraîchement précipité, par attaque d'un oxyde ou hydroxyde d'aluminium par l'acide HX.

Selon une variante de l'invention, il est possible de remplacer une partie du sol d'alumine de départ par des sols d'autres éléments comme par exemple ceux, lorsqu'ils existent, des éléments des groupes $I_B$, $III_B$, $IV_B$, $V_B$, $VI_B$, $III_A$, $IV_A$, $V_A$, $VI_A$, VIII de la classification périodique; il est également possible de mélanger le sol d'alumine de départ avec divers sels et en particulier ceux constitués avec les métaux des groupes $I_B$, $II_B$, $III_B$, $IV_B$, $V_B$, $III_A$, $IV_A$, $V_A$, $VI_A$, $VII_A$, VIII et des éléments du groupe $VI_B$ de la classification périodique. On peut également mélanger le sol d'alumine de départ avec tout composé catalytiquement actif ou non, parmi ceux-ci on peut notamment citer: les poudres des métaux des groupes $I_B$, $III_B$, $IV_B$, $V_B$, $VII_B$, $II_A$, $III_A$, $IV_A$, $V_A$, $VI_A$, $VII_A$, VIII et des éléments du groupe $VI_B$, ces poudres pouvant être les métaux ou les éléments eux-mêmes, leurs oxydes, leurs sels insolubles, les solutions solides et les oxydes mixtes de ceux-ci.

La solution de sol d'alumine mise en oeuvre selon l'invention contient de 5 à 35% en poids d'alumine comptée en $Al_2O_3$ et présente un rapport atomique Al/X compris entre 1,33 et 2,67. On notera que

$$\frac{Al}{X} = \frac{2}{a},$$

si l'on se réfère à la formule générale donnée ci-dessus. Selon une mise en oeuvre préférée de

2

l'invention, la concentration d'alumine dans la solution du sol de départ est comprise entre 15 et 30% en poids et le rapport atomique Al/X est compris entre 1,60 et 2,20.

La concentration de la solution d'hexaméthylènetétramine utilisée selon l'invention est comprise entre 15 et 45% en poids, selon une mise en oeuvre préférée, elle est comprise entre 30 et 45% en poids.

On mélange intimement la solution d'hexaméthylènetétramine avec la solution de sol d'alumine à une température inférieure à la température de gélification du mélange. Ce mélange est effectué dans des rapports en volume solutions d'hexaméthylènetétramine — sol d'alumine compris entre 3:4 et 1:20 environ, la valeur de ce rapport dépendant notamment de la concentration en alumine et de la valeur du rapport atomique Al/X du sol de départ, il peut être avantageux d'effectuer le mélange en proportions telles que ces rapports en volumes soient compris entre 1:1 et 1:6.

Ensuite, on disperse, sous forme de gouttelettes, le mélange résultant dans un liquide très peu miscible à l'eau. On peut utiliser comme liquide de formage, tout liquide ou tout mélange de liquides très peu miscible à l'eau d'une densité inférieure ou supérieure à celle des goutelettes. Selon un mode de mise en oeuvre préféré de l'invention, on utilisera un liquide de densité inférieure à celle des gouttelettes. On peut citer à titre d'exemples de liquides très peu miscibles à l'eau: le pétrole, le kérosène, le dodécylbenzène, les alcools et les solvants organiques en général.

Les gouttelettes de mélange se gélifient du fait de la neutralisation des anions contenus dans le sol de départ par l'ammoniaque libérée lors de l'hydrolyse de l'hexaméthylènetétramine. Afin d'obtenir, selon l'invention, une gélification convenable des gouttelettes, il est avantageux que la concentration en aluminium du mélange soit comprise entre 6 et 12% en poids, et préférentiellement entre 7 et 11%, que, de plus, le rapport molaire hexaméthylènetétramine/chlore soit supérieur à 0,17, et de préférence compris entre 0,2 et 0,6, que la température du liquide de formage soit comprise entre 50 et 105°C, et de préférence entre 85 et 95°C, et que le temps de séjour dans le milieu de formage soit compris entre 1 seconde et 2 heures environ.

Après cette étape de formage, on opère le vieillissement des billes obtenues dans le même type de milieu très peu miscible à l'eau que le milieu de formage. Ce vieillissement est opéré à une température comprise entre 105°C et 260°C et sous une pression supérieure à la pression atmosphérique et pour laquelle l'eau contenue dans les sphères de gel se trouve maintenue à l'état liquide. Il peut être avantageux d'opérer ce vieillissement à une température comprise entre 120°C et 150°C et sous une pression comprise entre 2 et 10 atmosphères et pendant une durée de 1 à 10 heures.

Il est communément admis que l'hexaméthylènetétramine s'hydrolyse ou se décompose aux températures de l'étape de vieillissement en composés basiques, il s'ensuit lors de cette opération une neutralisation des anions chlorures ou autres anions contenus dans le sol de départ; conformément à l'invention, il est nécessaire qu'à la fin de l'étape de vieillissement le taux de neutralisation desdits anions soit au moins de 68%, et de préférence d'au moins 80%, ce qui correspond notamment à un rapport atomique

$$\frac{Al}{X}$$

mesuré sur ces billes lavées supérieur à 6,25 et, de préférence, supérieur à 10.

Après cette première étape de vieillissement, on effectue une seconde étape de vieillissement des billes en milieu basique.

Comme milieu basique, on pourra mettre en oeuvre, aux fins de l'invention, diverses solutions basiques, et, en particulier, des solutions de soude, d'amines et d'ammoniaque. Aux fins de l'invention, on utilisera de préférence l'ammoniaque. La température de vieillissement en milieu basique est comprise entre 50°C et 100°C, et, de préférence, comprise entre 70°C et 98°C, le temps de vieillissement peut aller de 1 à 10 heures et, le pH mesuré à 25°C du milieu est compris entre 6 et 11, et, de préférence, entre 8 et 10.

Au cours de cette étape de vieillissement en milieu basique, on poursuit la transformation des gels d'alumine amorphe en boehmite. Le contrôle de l'évolution du taux de cristallisation en boehmite permet d'ajuster les caractéristiques texturales, des billes. La porosité et le diamètre de pores des billes varient dans le même sens que le taux de boehmite; ceci étant cohérent avec le fait que la surface spécifique des billes varie relativement peu. Le procédé selon l'invention permet ainsi de réaliser des billes d'alumine possédant d'excellentes propriétés mécaniques et dont les caractéristiques notamment de porosité, s'étendent dans une très large gamme. C'est un avantage particulier du procédé selon l'invention que de permettre la fabrication extrêmement aisée de billes d'alumine solides de porosité variable et facilement réglable par simple contrôle de l'évolution de la cristallisation.

Après l'étape de vieillissement en milieu basique, les billes sont lavées à l'eau d'une manière quelconque convenable et éventuellement en présence de petites quantités d'ammoniaque et/ou de nitrate d'ammonium.

Après le lavage, les billes sont séchées à une température comprise entre 90 et 200°C environ

3

pendant 1 à 24 heures, puis calcinées à 425—760°C environ pendant 2 à 10 heures. Le séchage des billes peut éventuellement être effectué en atmosphère humide.

Les billes obtenues après séchage et calcination présentent généralement les caractéristiques suivantes: elles ont une structure gamma-alumine, leur solidité mécanique mesurée par la méthode d'écrasement grain par grain pour des particules de 3 mm de diamètre varie de 3 kg à 20 kg, leur attrition est toujours supérieure à 99%, leur surface spécifique peut varier de 150 m²/g à 250 m²/g, leur diamètre de pores peut varier de 50 à 2000 Å et leur répartition de pores est monomodale, leur densité de remplissage peut varier de 0,2 g/cm³ à 1 g/cm³, et leur volume poreux de 0.3 cm³/g à 2,8 cm³/g.

Les billes obtenues présentent des propriétes mécaniques remarquables ou point de vue de l'attrition, de leur résistance à l'écrasement et de leur sphéricité. Cet ensemble de qualités leur permet d'être notamment utilisables très avantageusement dans des procédés régénératifs en lit fluide ou en lit mobile.

Selon une variante de l'invention, il est possible de traiter les billes avant l'étape de séchage-calcination avec des précurseurs d'éléments catalytiques; par ailleurs, l'étape de lavage peut être effectuée avec de l'eau chaude.

Selon une autre variante, on peut éventuellement effectuer une étape supplémentaire de lavage après séchage et calcination.

Selon une autre variante, il est évidemment possible de calciner les billes obtenues selon le procédé de l'invention à une température comprise entre 760°C et environ 1000°C (température correspondant généralement au début de la transformation en alumine de structure alpha). Dans ce cas, on obtient des billes comportant, suivant la température de calcination, des mélanges de phases d'alumine de structure gamma et delta puis gamma et thêta puis delta et thêta. La surface spécifique de ces billes diminue sans que leur volume poreux soit affecté dans des proportions appréciables, ces billes présentent après calcination entre 760 et 1000°C environ un retrait linéaire mesuré par dilatométrie inférieur à 2%. De façon connue, on peut retarder la transformation en alumine de structure alpha en ajoutant des stabilisants tels que par exemple des sels de terres rares ou de baryum, du silicate d'éthyle au sol de départ ou aux billes obtenues après séchage et éventuellement pré-calcination à basse température.

Les billes d'alumine selon la présente invention qui présentent une excellente résistance à l'écrasement dans une gamme de densité très large sont utilisables comme agent d'adsorption ou de catalyse. Ainsi, elles sont utilisables comme catalyseur ou support de catalyseur pour effectuer diverses réactions telles que par exemple: la déshydratation, l'hydrodésulfuration, le réformage à la vapeur, le craquage, l'hydrocraquage, l'hydrogénation, la déshydrogénation, la déshydrocyclisation d'hydrocarbures ou autres composés organiques. Les billes d'alumine selon l'invention sont également particulièrement utilisables comme catalyseur ou support de catalyseur dans le traitement des gaz d'échappement des moteurs à combustion interne ou dans la purification des gaz résiduaires industriels.

Lorsque les billes d'alumine de la présente invention sont utilisées comme support de catalyseurs, on peut évidemment leur associer tous les constituants catalytiques qu'il est possible de mettre en oeuvre dans les réactions envisagées.

Dans ce que suit, l'E.G.G. (écrasement grain par grain, exprimé en kg) représente la résistance à l'écrasement des billes; il a été déterminé comme la moyenne arithmétique sur 10 essais de la force nécessaire pour écraser une bille par application d'une force continue et progressive à partir de la charge zéro. Le V.P.T. représente le volume poreux total exprimé en cm³/g, la D.R.T. représente la densité de remplissage tassée exprimée en g/cm³, S représente la surface spécifique mesurée par la méthode un point exprimée en m²/g. Par ailleurs, l'abréviation H.M.T. signifie hexaméthylènetétramine.

Exemple 1

On a fabriqué des billes selon le procédé de l'invention en appliquant le mode opératoire général suivant, dont les données chiffrées sont rassemblées dans le tableau A ci-après.

Un hydroxychlorure d'aluminium est préparé par digestion d'aluminium dans l'acide chlorhydrique de façon à présenter un rapport atomique

$$\frac{Al}{Cl}$$

donné et une teneur en $Al_2O_3$ donnée. On mélange, à une température de 0°C, dans un rapport en volume donné, l'hydroxychlorure d'aluminium ainsi préparé avec une solution d'hexaméthylènetétramine de concentration en poids donnée. Le mélange présente un rapport molaire hexaméthylènetétramine/chlore donné et une concentration en aluminium donnée, il est admis à travers des capillaires dans une colonne contenant de l'huile de paraffine régulée à 90°C. Après un temps de séjour d'une heure, dans le milieu de formage, les billes sont essorées et mises dans un autoclave contenant du pétrole (point d'ébullition 200°C) pour opérer l'étape de vieillissement. La température du pétrole est amenée à une valeur donnée en deux heures, puis laissée un temps donné en palier de façon à amener

4

le taux de neutralisation à une valeur donnée. A la sortie de l'autoclave, les billes sont séparées du pétrole et admises dans un réacteur à circulation muni d'un condenseur et contenant de l'eau permutée. Quand la température de l'eau est en équilibre à 90°C, on ajoute une solution d'ammoniaque de façon à obtenir un pH mesuré à 25°C du milieu d'une valeur donnée, on maintient la température à une valeur donnée pendant un temps T donné, puis le milieu ammoniacal est vidangé et remplacé par de l'eau distillée à 90°C, on répète l'opération de lavage quatre fois. Les billes sont ensuite séchées à 150°C pendant cinq heures, puis calcinées à 600°C pendant deux heures. Les caractéristiques des billes obtenues sont consignées dans le tableau A ci-après.

TABLEAU A

| ETAPES DU PROCEDE | CARACTERISTIQUES | ESSAIS N° | | | | | |
|---|---|---|---|---|---|---|---|
| | | 1 | 2 | 3 | 4 | 5 | 6 |
| Sol d'Alumine | % $Al_2O_3$ | 20 | 30 | 20 | 19,55 | 25 | 18 |
| | Al /Cl | 2,07 | 1,67 | 2,07 | 2,16 | 2,07 | 2 |
| Solution d'HMT | % HMT | 37 | 41 | 37 | 40 | 37 | 28 |
| Mélange HMT—Sol d'Alumine | $\dfrac{\text{Vol HMT}}{\text{Vol Sol}}$ | 0,2 | 0,71 | 0,2 | 0,14 | 0,28 | 0,37 |
| | $\dfrac{\text{HMT}}{\text{Cl}}$ | 0,24 | 0,50 | 0,24 | 0,20 | 0,26 | 0,35 |
| | % Al | 9 | 10 | 9 | 9,2 | 10,9 | 7,3 |
| Mise en Forme dans l'Huile | Températures (°C) | 90 | 90 | 90 | 90 | 90 | 90 |
| Vieillissement dans Pétrole à l'Autoclave | Température (°C) | 130 | 130 | 130 | 135 | 130 | 130 |
| | Temps de palier (H) | 3 | 3 | 3 | 2 | 3 | 3 |
| | Taux de neutralisation | 0,8 | 0,9 | 0,8 | 0,75 | 0,8 | 0,85 |
| Vieillissement en Milieu Ammoniacal | Température (°C) | 90 | 90 | 95 | 90 | 85 | 95 |
| | Temps (H) | 5 | 5 | 5 | 5 | 10 | 1 |
| | pH | 9,36 | 9,5 | 9,5 | 8,80 | 9,5 | 9 |
| Caractéristiques des Billes Finies | E.G.G. | 13 | 14 | 3,2 | 10,05 | 12 | 11 |
| | V.P.T. | 0,74 | 0,70 | 1,77 | 0,57 | 0,75 | 0,70 |
| | D.R.T. | 00,54 | 0,57 | 0,27 | 0,65 | 0,56 | 0,57 |
| | S | 175 | 173 | 166 | 185 | 180 | 170 |

**0 001 023**

### Exemple 2

Cet exemple, donné à titre comparatif, illustre la variation extrêmement rapide du volume poreux en fonction de la température de vieillissement des billes dans le pétrole à l'autoclave.

On a procédé comme dans l'essai n° 1, donné dans l'exemple 1 ci-dessus mais sans effectuer l'étape de vieillissement en milieu ammoniacal, en opérant directement le lavage, le séchage et la calcination des billes à la sortie de l'autoclave.

### TABLEAU B

| TEMPERATURE d'AUTOCLAVAGE | V.P.T. | D.R.T. |
|---|---|---|
| | des billes finies | |
| 140° C | 0,37 | 0,79 |
| 150° C | 1,30 | 0,35 |

Il ressort de ce tableau qu'entre 0,37 et 1,30 cm³/g de V.P.T., on a

$$\frac{\Delta \text{ V.P.T.}}{\Delta \text{ T}} = 0,1 \text{ cm}^3/\text{g}/°\text{C}.$$

Il est donc difficile technologiquement de régler la porosité à une valeur donnée, cela nécessiterait en effet une régulation de température très précise et l'absence de toute hétérogénéite de température dans l'autoclave.

### Exemple 3

Cet exemple, également donné à titre comparatif, illustre les principaux inconvénients présentés par le procédé décrit dans le brevet français n° 1.042.771 par rapport au procédé selon l'invention. On a préparé des billes présentant une D.R.T. de 0,54 g/cm³.

Selon le procédé du brevet français n° 1.042.771, on est parti d'un sol d'alumine contenant 12% en poids d'alumine et présentant un rapport atomique Al/Cl de 1,46. On a mélangé ce sol avec une solution d'hexaméthylènetétramine à 28% dans des proportions égales en volume. Le mélange est mis en forme dans une colonne d'huile maintenue à 90°C. Les billes obtenues sont mûries dans leur milieu de formation à 90°C pendant 16 heures, puis dans une solution concentrée d'ammoniaque pendant 24 heures. Après, lavage, séchage à 120°C et calcination à 650°C, elles présentent une D.R.T. de 0,54 g/cm³.

La fabrication de billes d'une D.R.T. de 0,54 g/cm³ selon le procédé de l'invention qui correspond à l'essai n° 1 de l'exemple 1 ci-dessus n'a nécessité qu'un temps de vieillissement dans l'autoclave de 5 heures et dans l'ammoniaque de 5 heures, soit en tout de 10 heures au lieu de 40 heures. Par ailleurs, la concentration de la solution d'ammoniaque mise en oeuvre pour amener le pH à 9,5 n'a été que de 1,2% en poids au lieu d'utiliser de l'ammoniaque concentrée.

### Revendications

1. Procédé de fabrication de billes d'alumine à partir d'un sol d'alumine de formule générale $Al_2(OH)_{6-a}X_a$ dans laquelle X est au moins un des anions choisi parmi le groupe constitué par $F^-$, $Cl^-$, $Br^-$, $I^-$, $NO_3^-$, $ClO_4^-$, du type selon lequel on mélange des solutions de sol d'alumine et d'hexaméthylènetétramine à une température inférieure à la température de gélification, on disperse ce mélange sous forme de gouttelettes dans un liquide très peu miscible à l'eau à une température comprise entre 50 et 105°C, on procède dans un liquide très peu miscible à l'eau à un vieillissement des billes formées à une température supérieure à 105°C et sous une pression supérieure à la pression atmosphérique, on effectue ensuite un vieillissement des billes en milieu basique à une température comprise entre 50 et 100°C et on lave, sèche et calcine les billes résultantes caractérisé en ce que: le vieillissement des billes dans un liquide très peu miscible à l'eau est effectué à une température comprise entre 120 et 150°C jusqu'à l'obtention d'un taux de neutralisation des anions acides contenus dans le sol de départ d'au moins 68%.

2. Procédé de fabrication de billes d'alumine selon la revendication 1 caractérisé en ce que, en outre, le temps de séjour des gouttelettes de mélange que l'on a dispersées dans le liquide très peu

7

miscible à l'eau est compris entre 1 seconde et 2 heures.

3. Procédé de fabrication de billes d'alumine selon la revendication 1 caractérisé en ce que le taux de neutralisation est d'au moins 80%.

4. Procédé de fabrication de billes d'alumine selon la revendication 1 caractérisé en ce que en outre le vieillissement en milieu basique est effectué à une température comprise entre 70 et 98°C et à un pH compris entre 6 et 11 et de préférence entre 8 et 10 (pH mesuré à 25°C) pendant un temps compris entre 1 et 10 heures.

5. Procédé de fabrication de billes contenant de l'alumine à partir d'un sol d'alumine de formule générale $Al_2(OH)_{6-a}X_a$ dans laquelle X est au moins un des anions choisi parmi le groupe constitué par $F^-$, $Cl^-$, $Br^-$, $I^-$, $NO_3^-$, $ClO_4^-$, du type selon lequel on mélange des solutions de sol d'alumine et d'hexaméthylènetétramine à une température inférieure à la température de gélification, on disperse ce mélange sous forme de gouttelettes dans un liquide très peu miscible à l'eau à une température comprise entre 50 et 105°C, on procède dans un liquide très peu miscible à l'eau à un vieillissement des billes formées à une température supérieure à 105°C et sous une pression supérieure à la pression atmosphérique, on effectue ensuite un vieillissement des billes en milieu basique à une température comprise entre 50 et 100°C et on lave, sèche et calcine les billes résultantes caractérisé en ce que: le sol d'alumine de départ contient des sols d'éléments des groupes $I_B$, $III_B$, $IV_B$, $V_B$, $VI_B$, $III_A$, $IV_A$, $V_A$, $VI_A$, VIII, et en ce que le vieillissement des billes dans un liquide très peu miscible à l'eau est effectué à une température comprise entre 120 et 150°C jusqu'à l'obtention d'un taux de neutralisation des anions acides contenus dans le sol de départ d'au moins 68%.

**Claims**

1. Process for the manufacture of alumina beads from an alumina sol of the general formula $Al_2(OH)_{6-a}X_a$, in which X is at least one anion chosen from amongst the group comprising $F^-$, $Cl^-$, $Br^-$, $I^-$, $NO_3^-$, and $ClO_4^-$, of the type in which solutions of alumina sol and of hexamethylenetetramine are mixed at a temperature below the gelling point, this mixture is dispersed in the form of droplets in a liquid which is very sparingly miscible with water, at a temperature between 50 and 105°C, the beads formed are aged in a liquid which is very sparingly miscible with water, at a temperature above 105°C and under a pressure above atmospheric pressure, the beads are then aged in a basic medium, at a temperature between 50 and 100°C, and the resulting beads are washed, dried and calcined, characterised in that the ageing of the beads in a liquid which is very sparingly miscible with water is carried out at a temperature between 120 and 150°C until the degree of neutralisation of the acidic anions present in the starting sol reaches at least 68%.

2. Process for the manufacture of alumina beads according to Claim 1, characterised in that, furthermore, the residence time of the droplets of mixture which have been dispersed in the liquid which is very sparingly miscible with water is between 1 second and 2 hours.

3. Process for the manufacture of alumina beads according to Claim 1, characterised in that the degree of neutralisation is at least 80%.

4. Process for the manufacture of alumina beads according to Claim 1, characterised in that, furthermore, the ageing in a basic medium is carried out at a temperature between 70 and 98°C and at a pH of between 6 and 11 and preferably between 8 and 10 (pH measured at 25°C), for a period of between 1 and 10 hours.

5. Process for the manufacture of alumina-containing beads from an alumina sol of the general formula $Al_2(OH)_{6-a}X_a$, in which X is at least one anion chosen from amongst the group comprising $F^-$, $Cl^-$, $Br^-$,, $I^-$, $NO_3^-$ and $ClO_4^-$, of the type in which solutions of alumina sol and hexamethylenetetramine are mixed at a temperature below the gelling point, this mixture is dispersed in the form of droplets in a liquid which is very sparingly miscible with water, at a temperature between 50 and 105°C, the beads formed are aged in a liquid which is very sparingly miscible with water, at a temperature above 105°C and under a pressure above atmospheric pressure, the beads are then aged in a basic medium, at a temperature between 50 and 100°C, and the resulting beads are washed, dried and calcined, characterised in that the starting alumina sol contains sols of elements of groups IB, IIIB, IVB, VB, VIB, IIIA, IVA, VA, VIA and VIII, and in that the ageing of the beads in a liquid which is very sparingly miscible with water is carried out at a temperature between 120 and 150°C until the degree of neutralisation of the acidic anions present in the starting sol reaches at least 68%.

**Patentansprüche**

1. Verfahren zur Herstellung von Aluminiumoxidkugeln aus einem Aluminiumsol der allgemeinen Formel $Al_2(OH)_{6-a}X_a$, in der X wenigstens eines der Anionen der durch $F^-$, $Cl^-$, $Br^-$, $I^-$, $NO_3^-$, $ClO_4^-$ gebildeten Gruppe ist, bei dem man Lösungen von Aluminiumsol und Hexamethylentetramin bei einer Temperatur unterhalb der Gelbildungstemperatur mischt, diese Mischung in Form von Tröpfchen in einer mit Wasser sehr wenig mischbaren Flüssigkeit bei einer Temperatur zwischen 50 und 105°C dispergiert, in einer mit Wasser sehr wenig mischbaren Flüssigkeit eine Alterung der gebildeten Kugeln bei einer Temperatur über 105°C und unter einem Druck über Atmosphärendruck durchführt, anschließend eine Alterung der Kugeln in einem basischen Milieu bei einer Temperatur zwischen 50 und 100°C bewirkt und die erhaltenen Kugeln wäscht, trocknet und calciniert, dadurch gekennzeichnet, daß die Alterung der Kugeln in der mit Wasser sehr wenig mischbaren Flüssigkeit bei einer Temperatur zwischen 120 und 150°C bis zu einem Neutralisationsgrad der im Ausgangssol enthaltenen sauren Anionen von mindestens 68% durchgeführt wird.

2. Verfahren zur Herstellung von Aluminiumoxidkugeln nach Anspruch 1, dadurch gekennzeichnet, daß zusätzlich die Verweilzeit der Tröpfchen des in der mit Wasser sehr wenig mischbaren Flüssigkeit dispergierten Gemisches zwischen einer Sekunde und 2 Stunden beträgt.

3. Verfahren zur Herstellung von Aluminiumoxidkugeln nach Anspruch 1, dadurch gekennzeichnet, daß der Neutralisationsgrad mindestens 80% beträgt.

4. Verfahren zur Herstellung von Aluminiumoxidkugeln nach Anspruch 1, dadurch gekennzeichnet, daß zusätzlich die Alterung im basischen Milieu bei einer Temperatur zwischen 70 und 98°C und bei einem pH zwischen 6 und 11, vorzugsweise zwischen 8 und 10 (pH gemessen bei 25°C) während einer Zeit zwischen 1 und 10 Stunden durchgeführt wird.

5. Verfahren zur Herstellung von Kugeln, die Aluminium enthalten, aus einem Aluminiumsol der allgemeinen Formel $Al_2(OH)_{6-a}X_a$, in der X wenigstens eines der Anionen der durch $F^-$, $Cl^-$, $Br^-$, $I^-$, $NO_3^-$, $ClO_4^-$ gebildeten Gruppe ist, bei dem man Lösungen von Aluminiumsol und Hexamethylentetramin bei einer Temperatur unterhalb der Gelbildungstemperatur mischt, diese Mischung in Form von Tröpfchen in einer mit Wasser sehr wenig mischbaren Flüssigkeit bei einer Temperatur zwischen 50 und 105°C dispergiert, in einer mit Wasser sehr wenig mischbaren Flüssigkeit eine Alterung der gebildeten Kugeln bei einer Temperatur über 105°C und unter einem Druck über Atmosphärendruck durchführt, anschließend eine Alterung der Kugeln in einem basischen Milieu bei einer Temperatur zwischen 50 und 100°C bewirkt und die erhaltenen Kugeln wäscht, trocknet und calciniert, dadurch gekennzeichnet, daß das eingesetzte Aluminiumsol Sole von Elementen der Gruppen $I_B$, $III_B$, $IV_B$, $V_B$, $VI_B$, $III_A$, $IV_A$, $V_A$, $VI_A$, VIII enthält und daß die Alterung der Kugeln in einer mit Wasser wenig mischbaren Flüssigkeit bei einer Temperatur zwischen 120 und 150°C bis zu einem Neutralisationsgrad, der im Ausgangssol enthaltenen sauren Anionen von mindestens 68% durchgeführt wird.